# EUROPÄISCHE PATENTSCHRIFT

(11) **EP 3 321 109 B1**
(45) Veröffentlichungstag und Bekanntmachung des Hinweises auf die Patenterteilung: **19.06.2019**
(21) Anmeldenummer: 17187161.9
(22) Anmeldetag: 22.08.2017
(51) Int. Cl.: B60C 19/08, B60C 11/18, B60C 11/00

(54) **FAHRZEUGLUFTREIFEN**
PNEUMATIC TYRE FOR A VEHICLE
PNEUMATIQUE DE VÉHICULE

(30) Priorität: 10.11.2016 DE 102016222061
(43) Veröffentlichungstag der Anmeldung: 16.05.2018
(73) Patentinhaber: Continental Reifen Deutschland GmbH, 30165 Hannover (DE)
(72) Erfinder: Seng, Matthias, 30453 Hannover (DE); Torbrügge, Thorsten, 30855 Langenhagen (DE); Weber, Christian, 30826 Garbsen (DE)
(74) Vertreter: Finger, Karsten

(56) Entgegenhaltungen:
- EP-A2- 2 193 934
- JP-A- 2015 013 633
- US-B1- 6 523 585

## Beschreibung

Die Erfindung betrifft einen Fahrzeugluftreifen in Radialbauart mit einem einschichtigen oder in radialer Richtung mehrschichtigen Laufstreifen, wobei zumindest ein den Laufstreifen in radialer Richtung durchsetzender Carbon-Center-Beam vorgesehen ist und wobei der Laufstreifen bzw. die radial äußerste Laufstreifenschicht aus elektrisch nicht leitfähigem Gummimaterial und der Carbon-Center-Beam aus elektrisch leitfähigem Gummimaterial bestehen.

Ein Fahrzeugluftreifen der eingangs genannten Art mit einem in radialer Richtung zweischichtigen Laufstreifen ist beispielsweise aus der EP 2 193 934 A2 bekannt. Das Gummimantel der radial äußeren Laufstreifenschicht und das Gummimaterial des Carbon-Center-Beams sollen gemäß DIN 53516 eine weitgehend übereinstimmende Abriebsbeständigkeit aufweisen. Gemäß einem Ausführungsbeispiel weist das Gummimaterial der radial äußeren Laufstreifenschicht einen Spannungswert bei 300% (Norm unbekannt) von 14,5 MPa und eine Shore-A-Härte bei 100°C von 66 ShA auf. Das Gummimaterial des Carbon-Center-Beams weist gemäß diesem Ausführungsbeispiel einen Spannungswert bei 300% von 13,0 MPa und eine Shore-A-Härte bei 100°C von 63 ShA auf.

Aus der JP 2015 136 33 A ist ein Fahrzeugluftreifen mit einem einschichtigen Laufstreifen bekannt, in welchem Umfangsrillen verlaufen. An einer Rillenflanke einer innerhalb der Bodenaufstandsfläche befindlichen Umfangsrille verläuft eine elektrisch leitfähige Gummischicht, welches sich durch den Laufstreifen in radialer Richtung bis zum Gürtelverband erstreckt. Das elektrisch leitfähige Gummimaterial der Gummischicht weist einen Spannungswert bei 100% Dehnung, gemessen bei 25°C, gemäß JISK6251, von 8 MPa bis 14 MPa auf. Das Gummimaterial des Laufstreifens weist einen Spannungswert bei 100% Dehnung, gemessen bei 25°C, gemäß JISK6251, von 9 MPa bis 15 MPa auf.

Eine Ausführung eines Fahrzeugluftreifens mit einem Monolaufstreifen aus elektrisch nicht leitfähigem Gummimaterial und einem Carbon-Center-Beam aus elektrisch leitfähigem Gummimaterial ist beispielsweise aus der DE 698 11 548 T2 bekannt. Das Gummimaterial des Carbon-Center-Beams weist bei Raumtemperatur gemäß ASTM D412-97 einen Spannungswert bei 100% Dehnung von höchstens 2,1 MPa, insbesondere von höchstens 1,7 MPa, auf. Der elektrisch nicht leitfähige Laufstreifen weist einen Spannungswert bei 100% Dehnung von 1,4 MPa auf.

Zum Ableiten der beim Fahren auftretenden elektrostatischen Aufladungen ist es üblich, in Laufstreifen zumindest einen elektrisch leitfähigen Carbon-Center-Beam einzubauen, welcher beim Abrollen des Reifens mit dem Untergrund in Kontakt steht. Das Gummimaterial des Carbon-Center-Beams weist meistens eine niedrige Hysterese oder eine hohe Rückprallelastizität auf. Bei zweischichtig aus einer elektrisch leitfähigen Laufstreifenbase und einer Laufstreifencap aufgebauten Laufstreifen besteht der Carbon-Center-Beam vorzugsweise aus dem Gummimaterial der Laufstreifenbase, insbesondere wird dieser mit der Laufstreifenbase mitgebildet. Um die genannten Gummieigenschaften zu erreichen, sind der Carbon-Center-Beam und die Laufstreifenbase aus Kautschukmischungen gefertigt, welche eher geringe Mengen an Füllstoffen enthalten und aus welchen stark vernetztes Gummimaterial gebildet wird. Dieses Gummimaterial weist bei Raumtemperatur gemäß DIN 53512 relative hohe Spannungswerte bei 50% Dehnung und bei 100% Dehnung auf. Die Reißdehnung dieses Gummimaterials ist relativ gering, insbesondere im heißen Zustand und damit auch bei der Entnahme des Reifens aus der Vulkanisationsform, bei welcher die Gummitemperatur üblicherweise zwischen 140°C und 190°C liegt. Beim Entformen des Reifens aus der Vulkanisationsform ist der Laufstreifen daher im Bereich des Carbon-Center-Beams besonders rissanfällig, was vor allem bei weicheren Mischungen, wie sie für Laufstreifen von Winterreifen und Nordic-Reifen üblich sind, die zudem noch eine Vielzahl an Einschnitten aufweisen, besonders kritisch ist. Verläuft nun der Carbon-Center-Beam entlang spitzer Blockecken oder entlang der Randkante eines Profilblockes oder Profilbandes treten besonders leicht Einrisse auf Um dies zu vermeiden, ist es erforderlich, bei der Extrusion des Laufstreifens an die jeweilige Profilgeometrie angepasste Extrusionsvorschablonen zu verwenden.

Der Erfindung liegt daher die Aufgabe zu Grunde, bei einem Fahrzeugluftreifen der eingangs genannten Art ein Einreißen des Laufstreifens im Bereich des Carbon-Center-Beams beim Entformen aus der Vulkanisationsform zu vermeiden, insbesondere auch, um auf die Vielzahl erforderlicher Extrusionsvorschablonen verzichten zu können.

Die gestellte Aufgabe wird erfindungsgemäß dadurch gelöst, dass das Gummimaterial des Laufstreifens bzw. der radial äußersten Laufstreifenschicht und das Gummimaterial des Carbon-Center-Beams gemäß DIN 53504, jedoch bei einer Gummitemperatur von 150°C, Spannungswerte bei 50% Dehnung und Spannungswerte bei 100% Dehnung aufweisen, wobei sowohl bei einer Dehnung von 50% als auch bei einer Dehnung von 100% die Spannungswerte des Gummimaterials des Carbon-Center-Beams um höchstens 25% von den Spannungswerten des Gummimaterials des Laufstreifens bzw. der radial äußersten Laufstreifenschicht abweichen und wobei das Gummimaterial des Laufstreifens bzw. der radial äußersten Laufstreifenschicht und das Gummimaterial des Carbon-Center-Beams jeweils einen Spannungswert bei 100% Dehnung von 0,8 MPa bis 1,7 MPa aufweisen.

Gemäß der Erfindung werden daher die Spannungswerte der Gummimaterialien des Carbon-Center-Beams und des Laufstreifens bzw. der radial äußersten Laufstreifenschicht aneinander angeglichen, sodass auch die Kraft-Dehnungskurven dieser Gummimaterialien einander ähnlich sind. Die Kraft-Dehnungskurven beeinflussen unmittelbar das Entformungsverhalten der Gummimaterialen bei der Entnahme des Reifens aus der Vulkanisationsform. Bei einem erfindungsgemäßen Reifen sind daher die bei der Entnahme des Reifens aus der Vulkanisationsform zwischen der Vulkanisationsform und dem Laufstreifen auftretenden Kräfte über den Reifenquerschnitt besonders gleichmäßig. Es treten daher keine Spannungsspitzen auf, sodass das Ausformverhalten des Reifens maßgeblich verbessert wird. Ein erfindungsgemäßer Reifen ist daher auf einfache Weise mit im Bereich des Carbon-Center-Beams unbeschädigtem Laufstreifen aus der Vulkanisationsform ausform- und entnehmbar, auch in jenen Bereichen, wo der Carbon-Center-Beam an Blockecken, Blockkanten und dergleichen verläuft. Dementsprechend kann auf eine Vielzahl von Extrusionsvorschablonen verzichtet werden.

Bei einer bevorzugten Ausführungsvariante weisen das Gummimaterial des Laufstreifens bzw. der radial äußersten Laufstreifenschicht und das Gummimaterial des Carbon-Center-Beams gemäß ISO 7619-1 Shore-A-Härten auf, wobei die Shore-A-Härte des Gummimaterials des Carbon-Center-Beams von jener des Gummimaterials der Laufstreifenschicht um höchstens 5% abweicht. Dies trägt zu einer weiteren Verbesserung des Ausformverhaltens des Reifens bei. Insbesondere bei Winterreifen, welche im Vergleich zu Sommerreifen Laufstreifen aus einem weicheren Gummimaterial (geringe Shore-A-Härte) aufweisen, wird das Ausformverhalten des Reifens durch diese Maßnahme deutlich verbessert.

Ferner ist es für das Entformungsverhalten und für die Rissbeständigkeit des Gummimaterials des Carbon-Center-Beams von Vorteil, wenn das Gummimaterial des Carbon-Center-Beams gemäß ISO 7619-1 eine Shore-A-Härte von 45 Shore A bis 62 Shore A, insbesondere von 50 Shore A bis 62 Shore A, und besonders bevorzugter Weise von bis zu 60 Shore A aufweist.

Weitere gemäß bevorzugter Ausführungsvarianten der Erfindung vorgesehene Maßnahmen tragen dazu bei, das Ausformverhalten des Fahrzeugluftreifens zusätzlich zu verbessern. Dabei ist es vorteilhaft, wenn die Spannungswerte bei 50% Dehnung und bei 100% Dehnung des Gummimaterials des Carbon-Center-Beams um höchstens 20%, vorzugsweise um höchstens 15%, und besonders bevorzugter Weise um höchstens 10% von den Spannungswerten bei 50% Dehnung und bei 100% Dehnung des Gummimaterials des Laufstreifens bzw. der radial äußersten Laufstreifenschicht abweichen. Je ähnlicher die Spannungswerte des Gummimaterials des Laufstreifens bzw. der radial äußersten Laufstreifenschicht zu den Spannungswerten des Gummimateriales des Carbon-Center-Beams sind, desto besser ist das Ausformverhalten.

Gemäß einer weiteren bevorzugten Ausführungsvariante beträgt der Spannungswert bei 100% Dehnung des Gummimateriales des Laufstreifens bzw. der radial äußersten Laufstreifenschicht und der Spannungswert bei 100% Dehnung des Gummimateriales des Carbon-Center-Beams jeweils bis zu 1,4 MPa. Gummimaterialien mit solchen Spannungswerten weisen ein besonders vorteilhaftes Ausformverhalten nach der Vulkanisation auf.

Gemäß einer weiteren bevorzugten Ausführungsvariante ist vorgesehen, dass das Gummimaterial des Carbon-Center-Beams eine Rückprallelastizität bei 70°C gemäß DIN 53512 von mindestens 45%, vorzugsweise von mindestens 50%, aufweist. Dies trägt insbesondere zu einem geringen Rollwiderstand des Reifens bei.

Gemäß einer weiteren bevorzugten Ausführungsvariante sind das Gummimaterial des Laufstreifens bzw. der radial äußersten Laufstreifenschicht und das Gummimaterial des Carbon-Center-Beams aus Kautschukmischungen gefertigt, wobei der Kautschuk bzw. die Kautschuke, welche die Kautschukmischung des Gummimateriales des Laufstreifens bzw. der radial äußersten Laufstreifenschicht enthält, mit dem Kautschuk bzw. den Kautschuken, welche die Kautschukmischung des Gummimateriales des Carbon-Center-Beams enthält, übereinstimmt bzw. übereinstimmen.

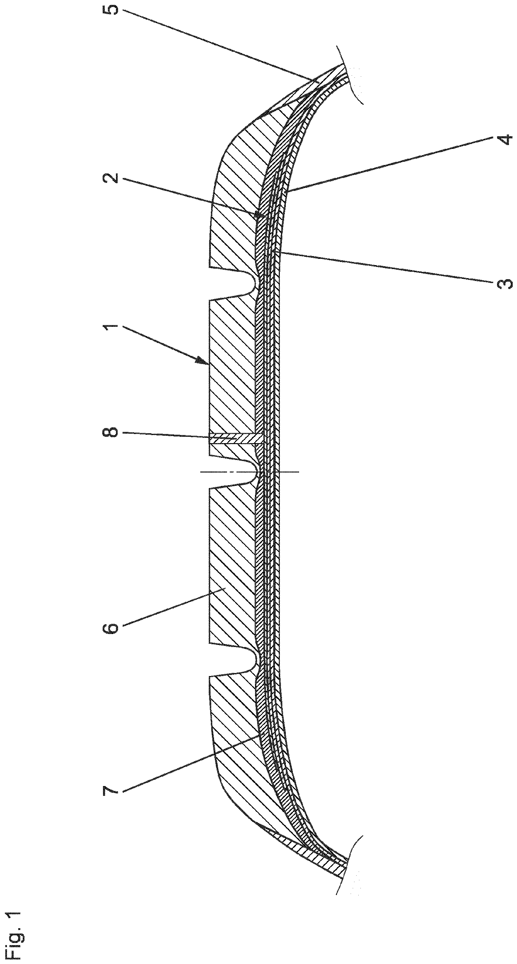

Weitere Merkmale, Vorteile und Einzelheiten der Erfindung werden nun anhand der einzigen Figur, Fig. 1, die schematisch einen Querschnitt durch einen Fahrzeugluftreifen im Bereich des Gürtelverbandes und des Laufstreifens mit einer Ausführungsvariante der Erfindung zeigt, näher erläutert.

In der nachfolgenden Beschreibung sowie in Tabelle 1 erfolgen die Mengenangaben in der in der Kautschuktechnologie üblichen Einheit phr (parts per hundred parts rubber). Die Mengenangaben beziehen sich dabei jeweils auf 100 Massenteile des Grundpolymers bzw. bei Polymerblends auf jene der Grundpolymere.

Erfindungsgemäß ausgeführte Fahrzeugluftreifen können Reifen für PKWs, Vans, Light-Trucks oder Nutzfahrzeuge sein, welche insbesondere für den Einsatz unter winterlichen Fahrbedingungen geeignet sind. Im Nachfolgenden wird die Erfindung exemplarisch anhand eines für einen PKW vorgesehenen Reifens in Radialbauart erläutert.

In Fig. 1 sind von den wesentlichen Bauteilen eines PKW-Reifen ein Laufstreifen 1, ein zweilagiger Gürtelverband 2, Abschnitte einer Karkasseinlage 3 und einer luftdichten Innenschicht 4 sowie die radial äußeren Endbereiche von Seitenwänden 5 dargestellt. Der Gürtelverband 2, die Karkasseinlage 3, die Innenschicht 4 und die Seitenwände 5 können in an sich bekannter Weise ausgeführt sein.

Der Laufstreifen 1 ist bei der gezeigten Ausführungsvariante in radialer Richtung zweischichtig aufgebaut und setzt sich aus einer die Profilierung enthaltenden Laufstreifencap 6 und einer radial innerhalb der Laufstreifencap 6 verlaufenden Laufstreifenbase 7 zusammen, welche sich über die Breite der Laufstreifencap 6 erstreckt. Die Laufstreifencap 6 besteht aus elektrisch nicht leitfähigem Gummimaterial, unter welchem ein solches verstanden wird, das einen spezifischen elektrischen Widerstand > 1^{∗}10⁸ Ohm^{∗}cm aufweist. Die Laufstreifenbase 7 besteht bevorzugter Weise ebenfalls aus einem elektrisch nicht leitfähigen Gummimaterial, sie kann jedoch auch aus einem elektrisch leitfähigen Gummimaterial bestehen. Die Laufstreifencap 6 ist insbesondere aus einer Silica (Kieselsäure) und Ruß enthaltenden Kautschukmischung gefertigt, wobei die Mengen an Silica und Ruß derart gewählt sind, dass bei der Vulkanisation aus dieser Kautschukmischung elektrisch nicht leitfähiges Gummimaterial gebildet wird. Bevorzugter Weise ist auch die Laufstreifenbase 7 aus einer derartigen Kautschukmischung gefertigt. Gemäß einer weiteren Ausführungsvariante ist der Laufstreifen 1 als einteiliger, elektrisch nicht leitfähiger Monolaufstreifen ausgeführt.

Der Laufstreifen 1 - bei der gezeigten Variante die Laufstreifencap 6 und die Laufstreifenbase 7 - ist in radialer Richtung von zumindest einem, bei der in Fig. 1 gezeigten Variante von genau einem, elektrisch leitfähigen Carbon-Center-Beam 8 durchsetzt, welcher ein elektrisch leitfähiger Gummistreifen ist. Radial innerhalb der Laufstreifenbase 7 kontaktiert der Carbon-Center-Beam 8 über seine Umfangserstreckung zumindest abschnittsweise zumindest einen elektrisch leitfähigen Reifenbauteil oder zumindest ein elektrisch leitfähiges Element, welcher bzw. welches über weitere elektrisch leitfähige Reifenbauteile oder weitere elektrisch leitfähige Elemente bei auf der Felge montiertem Reifen mit dieser in elektrisch leitender Verbindung steht.

Das Gummimaterial des Carbon-Center-Beams 8 und das Gummimaterial der Laufstreifencap 6 weisen bei einer Gummitemperatur von 150°C im Wesentlichen übereinstimmende, insbesondere überstimmende Spannungswerte bei 50% Dehnung (σ₅₀) und im Wesentlichen übereinstimmende oder auch übereinstimmende Spannungswerte bei 100% Dehnung (σ₁₀₀) auf. Die Spannungswerte σ₅₀, σ₁₀₀ des Gummimaterials des Carbon-Center-Beams 8 weichen um höchstens 25%, insbesondere um höchstens 20%, bevorzugter Weise um höchstens 15%, und besonders bevorzugter Weise um höchstens 10%, von den Spannungswerten σ₅₀, σ₁₀₀ des Gummimaterials der Laufstreifencap 6 ab. Die Spannungswerte σ₅₀, σ₁₀₀ wurden mittels Zugversuchen gemäß DIN 53504, jedoch mit auf 150°C temperierten Probekörpern, ermittelt. Zur Temperierung wurden die Probekörper 30 Minuten bei 150°C gelagert, beispielsweise in einem Ofen oder dergleichen. Die Probekörper wurde mit einer ebenfalls auf 150°C temperierten Prüfmaschine vermessen. Während der Prüfung wiesen die Probekörper eine Gummitemperatur von 150°C+/-3°C auf.

Die Gummimaterialien der Laufstreifencap 6 und des Carbon-Center-Beams 8 weisen bei einer Gummitemperatur von 150°C jeweils einen Spannungswert σ₁₀₀ von 0,8 MPa bis 1,7 MPa, vorzugsweise von bis zu 1,4 MPa, auf.

Bevorzugter Weise weisen die Gummimaterialien des Carbon-Center-Beams 8 und der Laufstreifencap 6 zusätzlich im Wesentlichen übereinstimmende bzw. übereinstimmende Shore A-Härten auf, wobei die Shore A-Härte des Gummimaterials des Carbon-Center-Beams 8 um höchstens 5% von der Shore A-Härte des Gummimaterials der Laufstreifencap 6 abweicht. Die Shore-A-Härten werden gemäß ISO 7619-1 ermittelt.

Das Gummimaterial des Carbon-Center-Beams 8 weist eine Shore-A-Härte von 45 Shore A bis 62 Shore A, insbesondere von 50 Shore A bis 62 Shore A, besonders bevorzugter Weise von bis zu 60 Shore A, auf. Ferner weist das Gummimaterial des Carbon-Center-Beams 8 eine Rückprallelastizität bei 70°C gemäß DIN 53512 von mindestens 45%, vorzugsweise von mindestens 50%, auf, was für den Rollwiderstand des Reifes von Vorteil ist.

In Tabelle 1 sind zwei Beispiele M_{CAP1}, M_{CAP2} für die Zusammensetzung der Kautschukmischung der Laufstreifencap 6 und jeweils zwei zu diesen Beispielen M_{CAP1}, M_{CAP2} gehörende Beispiele M_{CCB1}, M_{CCB1}' bzw. M_{CCB2}, M_{CCB2}' für die Zusammensetzung der Kautschukmischung des Carbon-Center-Beams 8 angegeben. Tabelle 2 enthält die Ergebnisse der Zugversuche bei 150°, die Shore-A-Härten und die Rückprallelastizitäten, jeweils bei Raumtemperatur (25°C) und bei 70°C, der aus diesen Kautschukmischungen hergestellten Gummimaterialien.

**Tabelle 1: Mischungszusammensetzungen**

| **Bestandteil [phr]** | M_{CAP1} | M_{CCB1} | M_{CCB1}' | M_{CAP2} | M_{CCB2} | M_{CCB2}' |
|---|---|---|---|---|---|---|
| Naturkautschuk | 80,00 | 80,00 | 80,00 | 60,00 | 60,00 | 50,00 |
| Nd-Butadienkautschuk ^{a} | 20,00 | 20,00 | 20,00 | 30,00 | 30,00 | 25,00 |
| SSBR ^{b} | - | - | - | 10,00 | 10,00 | 25,00 |
| Ruß ^{c} | 10,00 | 70,00 | 60,00 | 30,00 | 60,00 | 60,00 |
| Kieselsäure ^{d} | 80,00 | 20,00 | - | 45,00 | - | 5,00 |
| MES Öl (Mild Extraction Solvate) | 25,00 | 15,00 | - | 45,00 | 40,00 | 20,00 |
| Rapsöl | 20,00 | 20,00 | 15,00 | - | - | 20,00 |
| Alterungsschutzmittel ^{e} | 7,00 | 7,00 | 7,00 | 7,00 | 7,00 | 7,00 |
| Zinkoxid ^{f} | 3,00 | 3,00 | 3,00 | 3,00 | 3,00 | 3,00 |
| Stearinsäure | 2,00 | 2,00 | 2,00 | 2,00 | 2,00 | 2,00 |
| Prozesshilfsmittel ^{g} | 3,00 | 3,00 | 3,00 | 3,00 | 3,00 | 3,00 |
| Silan ^{h} | 5,50 | 1,50 | - | 3,50 | - | - |
| Beschleuniger ⁱ | 4,00 | 2,00 | 1,50 | 2,00 | 1,70 | 1,70 |
| Schwefel | 2,00 | 2,00 | 1,75 | 2,00 | 2,50 | 2,50 |

| | | | | | | |
|---|---|---|---|---|---|---|
| ^{a} Neodym katalysierter Butadienkautschuk ^{b} "Solution-SBR", durch Lösungspolymerisation hergestellter Styrol-Butadien-Kautschuk, z.B. NS 612 d. Firma Zeon Chemicals ^{c} N 339 ^{e} TMQ, DTPD, 6PPD, Wachs ^{g} Ester, Seifen ⁱ CBS, TBBS, CTP ^{d} Silica VN 3 ^{f} ZNO Rotsiegel gran. ^{h} "TESPD", bis(triethoxysilylpropyl)disulfid | | | | | | |

**Tabelle 2: Prüfergebnisse**

| **Prüfergebnisse** | M_{CAP1} | M_{CCB1} | M_{CCB1'} | M_{CAP2} | M_{CCB2} | M_{CCB2'} |
|---|---|---|---|---|---|---|
| Härte bei Raumtemperatur [Shore A] | 57 | 56 | 57 | 47 | 47 | 46 |
| Härte bei 70 °C [Shore A] | 50 | 49 | 49 | 41 | 40 | 39 |
| Rückprallelastizität bei Raumtemperatur [%] | 35 | 35 | 44 | 41 | 47 | 42 |
| Rückprallelastizität bei 70°C [%] | 47 | 47 | 51 | 50 | 55 | 47 |
| | | | | | | |

| Ergebnisse der Zugversuche bei 150 °C | | | | | | |
|---|---|---|---|---|---|---|
| σ50 bei 150°C [MPa] | 0,73 | 0,78 | 0,86 | 0,61 | 0,64 | 0,60 |
| σ100 bei 150°C [MPa] | 1,11 | 1,22 | 1,29 | 0,99 | 1,07 | 0,97 |
| Zugfestigkeit bei 150°C [MPa] ("Tensile Strength") | 6,1 | 4,5 | 4,6 | 5,2 | 4,1 | 4,4 |
| Reißdehnung bei 150°C [%] ("Elongation at Break") | 810 | 440 | 470 | 630 | 390 | 480 |

Die in den Kautschukmischungen der Laufstreifencap 6 und des Carbon-Center-Beams 8 enthaltenen Kautschuke stimmen vorzugsweise überein, wobei insbesondere die Mengen der jeweils vorgesehenen Kautschuktypen (z.b. Naturkautschuk) in der Kautschukmischung der Laufstreifencap 6 und des Carbon-Center-Beams 8 um höchstens 20 phr, insbesondere um höchstens 15 phr, voneinander abweichen.

Die Kautschukmischung der Laufstreifenbase 7 ist vorzugsweise hinsichtlich des Rollwiderstandes des Reifens optimiert und enthält vorzugsweise Füllstoffe in einer Menge von höchstens 75 phr.

Ist der Laufstreifen 1 ein Monolaufstreifen kann die Zusammensetzung seiner Kautschukmischung jener der Beispiele M_{CAP1} oder M_{CAP2} entsprechen. Bei dieser Variante weichen daher die Spannungswerte σ₅₀, σ₁₀₀ des Gummimaterials des Carbon-Center-Beams um höchstens 25%, insbesondere um höchstens 20%, bevorzugter Weise um höchstens 15%, und besonders bevorzugter Weise um höchstens 10%, von den Spannungswerten des Gummimaterials des Monolaufstreifens ab.

### Bezugsziffernliste

- 1: Laufstreifen
- 2: Gürtelverband
- 3: Karkasseinlage
- 4: Innenschicht
- 5: Seitenwand
- 6: Laufstreifencap
- 7: Laufstreifenbase
- 8: Carbon-Center-Beam

## Patentansprüche

1. Fahrzeugluftreifen in Radialbauart mit einem einschichtigen oder in radialer Richtung mehrschichtigen Laufstreifen (1), wobei zumindest ein den Laufstreifen (1) in radialer Richtung durchsetzender Carbon-Center-Beam (8) vorgesehen ist und wobei der Laufstreifen (1) bzw. die radial äußerste Laufstreifenschicht (6) aus elektrisch nicht leitfähigem Gummimaterial und der Carbon-Center-Beam (8) aus elektrisch leitfähigem Gummimaterial bestehen, **dadurch gekennzeichnet,**
**dass** das Gummimaterial des Laufstreifens (1) bzw. der radial äußersten Laufstreifenschicht (6) und das Gummimaterial des Carbon-Center-Beams (8) gemäß DIN 53504, jedoch bei einer Gummitemperatur von 150°C, Spannungswerte bei 50% Dehnung (σ₅₀) und Spannungswerte bei 100% Dehnung (σ₁₀₀) aufweisen, wobei sowohl bei einer Dehnung von 50% als auch bei einer Dehnung von 100% die Spannungswerte (σ₅₀, σ₁₀₀) des Gummimaterials des Carbon-Center-Beams (8) um höchstens 25% von den Spannungswerten des Gummimaterials des Laufstreifens (1) bzw. der radial äußersten Laufstreifenschicht (6) abweichen und wobei das Gummimaterial des Laufstreifens (1) bzw. der radial äußersten Laufstreifenschicht (6) und das Gummimaterial des Carbon-Center-Beams (8) jeweils einen Spannungswert bei 100% Dehnung (σ₁₀₀) von 0,8 MPa bis 1,7 MPa aufweisen.

2. Fahrzeugluftreifen nach Anspruch 1, **dadurch gekennzeichnet, dass** das Gummimaterial des Laufstreifens (1) bzw. der radial äußersten Laufstreifenschicht (6) und das Gummimaterial des Carbon-Center-Beams (8) gemäß ISO 7619-1 Shore-A-Härten aufweisen, wobei die Shore-A-Härte des Gummimaterials des Carbon-Center-Beams (8) von jener des Gummimaterials der Laufstreifenschicht (6) um höchstens 5% abweicht.

3. Fahrzeugluftreifen nach Anspruch 2, **dadurch gekennzeichnet, dass** das Gummimaterial des Carbon-Center-Beams (8) gemäß ISO 7619-1 eine Shore-A-Härte von 45 Shore A bis 62 Shore A, insbesondere von 50 Shore A bis 62 Shore A, und besonders bevorzugter Weise von bis zu 60 Shore A aufweist.

4. Fahrzeugluftreifen nach einem der Ansprüche 1 bis 3, **dadurch gekennzeichnet, dass** die Spannungswerte bei 50% Dehnung (σ₅₀) und bei 100% Dehnung (σ₁₀₀) des Gummimaterials des Carbon-Center-Beams (8) um höchstens 20% von den Spannungswerten bei 50% Dehnung (σ₅₀) und bei 100% Dehnung (σ₁₀₀) des Gummimaterials des Laufstreifens (1) bzw. der radial äußersten Laufstreifenschicht (6) abweichen.

5. Fahrzeugluftreifen nach einem der Ansprüche 1 bis 4, **dadurch gekennzeichnet, dass** die Spannungswerte bei 50% Dehnung (σ₅₀) und bei 100% Dehnung (σ₁₀₀) des Gummimaterials des Carbon-Center-Beams (8) um höchstens 15% von den Spannungswerten bei 50% Dehnung (σ₅₀) und bei 100% Dehnung (σ₁₀₀) des Gummimaterials des Laufstreifens (1) bzw. der radial äußersten Laufstreifenschicht (6) abweichen.

6. Fahrzeugluftreifen nach einem der Ansprüche 1 bis 5, **dadurch gekennzeichnet, dass** die Spannungswerte bei 50% Dehnung (σ₅₀) und bei 100% Dehnung (σ₁₀₀) des Gummimaterials des Carbon-Center-Beams (8) um höchstens 10% von den Spannungswerten bei 50% Dehnung (σ₅₀) und bei 100% Dehnung (σ₁₀₀) des Gummimaterials des Laufstreifens (1) bzw. der radial äußersten Laufstreifenschicht (6) abweichen.

7. Fahrzeugluftreifen nach einem der Ansprüche 1 bis 6, **dadurch gekennzeichnet, dass** der Spannungswert bei 100% Dehnung (σ₁₀₀) des Gummimateriales des Laufstreifens (1) bzw. der radial äußersten Laufstreifenschicht (6) und der Spannungswert bei 100% Dehnung des Gummimateriales des Carbon-Center-Beams (8) jeweils bis zu 1,4 MPa beträgt.

8. Fahrzeugluftreifen nach einem der Ansprüche 1 bis 7, **dadurch gekennzeichnet, dass** das Gummimaterial des Carbon-Center-Beams (8) eine Rückprallelastizität bei 70°C gemäß DIN 53512 von mindestens 45%, vorzugsweise von mindestens 50%, aufweist.

9. Fahrzeugluftreifen nach einem der Ansprüche 1 bis 8, **dadurch gekennzeichnet, dass** das Gummimaterial des Laufstreifens (1) bzw. der radial äußersten Laufstreifenschicht (6) und das Gummimaterial des Carbon-Center-Beams (8) aus Kautschukmischungen gefertigt sind, wobei der Kautschuk bzw. die Kautschuke, welche die Kautschukmischung des Gummimateriales des Laufstreifens (1) bzw. der radial äußersten Laufstreifenschicht (6) enthält, mit dem Kautschuk bzw. den Kautschuken, welche die Kautschukmischung des Gummimateriales des Carbon-Center-Beams (8) enthält, übereinstimmt bzw. übereinstimmen.

## Claims

1. Pneumatic vehicle tyre of a radial type of construction, with a tread (1) of a single layer or multiple layers in the radial direction, wherein at least one carbon center beam (8) is provided, passing through the tread (1) in the radial direction, and wherein the tread (1) or the radially outermost tread layer (6) consists of electrically nonconductive rubber material and the carbon center beam (8) consists of electrically conductive rubber material, **characterized**
**in that** the rubber material of the tread (1) or of the radially outermost tread layer (6) and the rubber material of the carbon center beam (8) have according to DIN 53504, but at a rubber temperature of 150°C, stress values at 50% elongation (σ₅₀) and stress values at 100% elongation (σ₁₀₀), wherein both with an elongation of 50% and with an elongation of 100% the stress values (σ₅₀, σ₁₀₀) of the rubber material of the carbon center beam (8) deviate by at most 25% from the stress values of the rubber material of the tread (1) or of the radially outermost tread layer (6) and wherein the rubber material of the tread (1) or of the radially outermost tread layer (6) and the rubber material of the carbon center beam (8) respectively have a stress value at 100% elongation (σ₁₀₀) of 0.8 MPa to 1.7 MPa.

2. Pneumatic vehicle tyre according to Claim 1, **characterized in that** the rubber material of the tread (1) or of the radially outermost tread layer (6) and the rubber material of the carbon center beam (8) have Shore A hardnesses according to ISO 7619-1, wherein the Shore A hardness of the rubber material of the carbon center beam (8) deviates from that of the rubber material of the tread layer (6) by at most 5%.

3. Pneumatic vehicle tyre according to Claim 2, **characterized in that** the rubber material of the carbon center beam (8) has according to ISO 7619-1 a Shore A hardness of 45 Shore A to 62 Shore A, in particular of 50 Shore A to 62 Shore A, and particularly preferably of up to 60 Shore A.

4. Pneumatic vehicle tyre according to one of Claims 1 to 3, **characterized in that** the stress values at 50% elongation (σ₅₀) and at 100% elongation (σ₁₀₀) of the rubber material of the carbon center beam (8) deviate by at most 20% from the stress values at 50% elongation (σ₅₀) and at 100% elongation (σ₁₀₀) of the rubber material of the tread (1) or of the radially outermost tread layer (6).

5. Pneumatic vehicle tyre according to one of Claims 1 to 4, **characterized in that** stress values at 50% elongation (σ₅₀) and at 100% elongation (σ₁₀₀) of the rubber material of the carbon center beam (8) deviate by at most 15% from the stress values at 50% elongation (σ₅₀) and at 100% elongation (σ₁₀₀) of the rubber material of the tread (1) or of the radially outermost tread layer (6).

6. Pneumatic vehicle tyre according to one of Claims 1 to 5, **characterized in that** the stress values at 50% elongation (σ₅₀) and at 100% elongation (σ₁₀₀) of the rubber material of the carbon center beam (8) deviate by at most 10% from the stress values at 50% elongation (σ₅₀) and at 100% elongation (σ₁₀₀) of the rubber material of the tread (1) or of the radially outermost tread layer (6).

7. Pneumatic vehicle tyre according to one of Claims 1 to 6, **characterized in that** the stress value at 100% elongation (σ₁₀₀) of the rubber material of the tread (1) or of the radially outermost tread layer (6) and the stress value at 100% elongation of the rubber material of the carbon center beam (8) is in each case up to 1.4 MPa.

8. Pneumatic vehicle tyre according to one of Claims 1 to 7, **characterized in that** the rubber material of the carbon center beam (8) has a rebound elasticity at 70°C according to DIN 53512 of at least 45%, preferably of at least 50%.

9. Pneumatic vehicle tyre according to one of Claims 1 to 8, **characterized in that** the rubber material of the tread (1) of the radially outermost tread layer (6) and the rubber material of the carbon center beam (8) are produced from natural rubber compounds, wherein the natural rubber or natural rubbers which the natural rubber compound of the rubber material of the tread (1) or of the radially outermost tread layer (6) contains coincides or coincide with the natural rubber or natural rubbers that the natural rubber compound of the rubber material of the carbon center beam (8) contains.

## Revendications

1. Pneumatique de véhicule de type radial avec une bande de roulement (1) en une couche ou à plusieurs couches en direction radiale, dans lequel il est prévu au moins une barrette centrale de carbone (8) traversant en direction radiale la bande de roulement (1) et dans lequel la bande de roulement (1) ou la couche de la bande de roulement radialement le plus extérieure (6) se compose d'un matériau de gomme électriquement non conducteur et la barrette centrale de carbone (8) se compose d'un matériau de gomme électriquement conducteur, **caractérisé en ce que** le matériau de gomme de la bande de roulement (1) ou de la couche de la bande de roulement radialement le plus extérieure (6) et le matériau de gomme de la barrette centrale de carbone (8) présentent selon la norme DIN 53504, cependant à une température de la gomme de 150°C, des valeurs de contrainte à 50 % d'allongement (σ₅₀) et des valeurs de contrainte à 100 % d'allongement (σ₁₀₀), dans lequel aussi bien pour un allongement de 50 % que pour un allongement de 100 %, les valeurs de contrainte (σ₅₀, σ₁₀₀) du matériau de gomme de la barrette centrale de carbone (8) s'écartent au maximum de 25 % des valeurs de contrainte du matériau de gomme de la bande de roulement (1) ou de la couche de la bande de roulement le plus extérieure (6) et dans lequel le matériau de gomme de la bande de roulement (1) ou le matériau de gomme de la couche de la bande de roulement radialement le plus extérieure (6) et le matériau de gomme de la barrette centrale de carbone (8) présentent respectivement une valeur de contrainte à 100 % d'allongement (σ₁₀₀) de 0,8 MPa à 1,7 MPa.

2. Pneumatique de véhicule selon la revendication 1, **caractérisé en ce que** le matériau de gomme de la bande de roulement (4) ou de la couche de la bande de roulement radialement le plus extérieure (6) et le matériau de gomme de la barrette centrale de carbone (8) présentent selon la norme ISO 7619-1 des duretés Shore A, dans lequel la dureté Shore A du matériau de gomme de la barrette centrale de carbone (8) s'écarte au maximum de 5 % de celle du matériau de gomme de la couche de la bande de roulement (6).

3. Pneumatique de véhicule selon la revendication 2, **caractérisé en ce que** le matériau de gomme de la barrette centrale de carbone (8) présente selon la norme ISO 7619-1 une dureté Shore A de 45 Shore A à 62 Shore A, en particulier de 50 Shore A à 62 Shore A, et de préférence encore jusqu'à 60 Shore A.

4. Pneumatique de véhicule selon l'une quelconque des revendications 1 à 3, **caractérisé en ce que** les valeurs de contrainte à 50 % d'allongement (σ₅₀) et à 100 % d'allongement (σ₁₀₀) du matériau de gomme de la barrette centrale de carbone (8) s'écartent au maximum de 20 % des valeurs de contrainte à 50 % d'allongement (σ₅₀) et à 100 % d'allongement (σ₁₀₀) du matériau de gomme de la bande de roulement (1) ou de la couche de la bande de roulement radialement le plus extérieure (6).

5. Pneumatique de véhicule selon l'une quelconque des revendications 1 à 4, **caractérisé en ce que** les valeurs de contrainte à 50 % d'allongement (σ₅₀) et à 100 % d'allongement (σ₁₀₀) du matériau de gomme de la barrette centrale de carbone (8) s'écartent au maximum de 15 % des valeurs de contrainte à 50 % d'allongement (σ₅₀) et à 100 % d'allongement (σ₁₀₀) des valeurs de contrainte à 50 % d'allongement (σ₅₀) et à 100 % d'allongement (σ₁₀₀) du matériau de gomme de la bande de roulement (1) ou de la couche de la bande de roulement radialement le plus extérieure (6).

6. Pneumatique de véhicule selon l'une quelconque des revendications 1 à 5, **caractérisé en ce que** les valeurs de contrainte à 50 % d'allongement (σ₅₀) et à 100 % d'allongement (σ₁₀₀) du matériau de gomme de la barrette centrale de carbone (8) s'écartent au maximum de 10 % des valeurs de contrainte à 50 % d'allongement (σ₅₀) et à 100 % d'allongement (σ₁₀₀) des valeurs de contrainte à 50 % d'allongement (σ₅₀) et à 100 % d'allongement (σ₁₀₀) du matériau de gomme de la bande de roulement (1) ou de la couche de la bande de roulement radialement le plus extérieure (6).

7. Pneumatique de véhicule selon l'une quelconque des revendications 1 à 6, **caractérisé en ce que** la valeur de contrainte à 100 % d'allongement (σ₁₀₀) du matériau de gomme de la bande de roulement (1) ou de la couche de la bande de roulement radialement le plus extérieure (6) et la valeur de contrainte à 100 % d'allongement (σ₁₀₀) du matériau de gomme de la barrette centrale de carbone (8) valent respectivement jusqu'à 1,4 MPa.

8. Pneumatique de véhicule selon l'une quelconque des revendications 1 à 7, **caractérisé en ce que** le matériau de gomme de la barrette centrale de carbone (8) présente une élasticité au rebond à 70°C selon la norme DIN 53512 d'au moins 45 %, de préférence d'au moins 50 %.

9. Pneumatique de véhicule selon l'une quelconque des revendications 1 à 8, **caractérisé en ce que** le matériau de gomme de la bande de roulement (1) ou de la couche de la bande de roulement radialement le plus extérieure (6) et le matériau de gomme de la barrette centrale de carbone (8) sont fabriqués en mélanges de caoutchouc, dans lequel le caoutchouc ou les caoutchoucs, que contient le mélange de caoutchouc du matériau de gomme de la bande de roulement (1) ou de la couche de la bande de roulement le plus extérieure (6) concorde ou concordent avec le caoutchouc ou les caoutchoucs, que contient le mélange de caoutchouc du matériau de gomme de la barrette centrale de carbone (8).
